# EUROPÄISCHE PATENTSCHRIFT

(11) **EP 1 936 457 B1**
(45) Veröffentlichungstag und Bekanntmachung des Hinweises auf die Patenterteilung: **08.04.2009**
(21) Anmeldenummer: 06026381.1
(22) Anmeldetag: 20.12.2006
(51) Int. Cl.: G05B 19/05, H01H 47/00

(54) **Modulare Sicherheitsschaltvorrichtung und Sicherheitsschaltverfahren**
Modular safety switching device and safety switching device method
Dispositif de couplage de sécurité modulaire et procédé de couplage de sécurité

(43) Veröffentlichungstag der Anmeldung: 25.06.2008
(73) Patentinhaber: SICK AG, 79183 Waldkirch (DE)
(72) Erfinder: Dold, Franz, 78120 Furtwangen (DE)
(74) Vertreter: Ludewigt, Christoph

(56) Entgegenhaltungen:
- DE-A1- 10 020 075
- US-A- 5 068 778

## Beschreibung

Die Erfindung betrifft eine modulare Sicherheitsschaltvorrichtung und ein Sicherheitsschaltverfahren nach den Oberbegriffen von Anspruch 1 beziehungsweise 21.

Sicherheitsschaltgeräte dienen dazu, bei Anliegen eines Gefahrensignals fehlerfrei auf eine vorgegebene Art zu reagieren. Eine typische Anwendung der Sicherheitstechnik ist die Absicherung einer gefährlichen Maschine, wie etwa einer Presse oder einer Fräse, die sofort abgeschaltet werden muss, wenn sich Bedienpersonal in unerlaubter Weise nähert. Dazu ist ein Sensor vorgesehen, der die Annäherung erkennt, wie etwa eine Lichtschranke oder ein Lichtgitter. Erkennt ein solcher Sensor eine Gefährdung, so muss eine ihm nachgeordnete Schaltung absolut zuverlässig ein Abschaltsignal generieren.

In der Praxis überwacht zumeist nicht ein einzelner Sensor eine einzelne Maschine, sondern es müssen eine ganze Reihe von Gefährdungsquellen überwacht werden. Die entsprechende Vielzahl zugehöriger Sensoren, die jeweils ein Schaltereignis definieren können und geeigneter Maßnahmen zur Beseitigung von Gefährdungen muss dann konfiguriert werden. Im einfachsten Falle kann es genügen, auf jedes Schaltereignis in einer Oder-Verknüpfung zu reagieren. Bei einer Maschine, die hinter einer abgesicherten Tür durch ein Lichtgitter geschützt steht und die einen Not-Aus-Schalter hat, sollte sowohl das Öffnen der Tür als auch ein Eingriff in das Lichtgitter oder ein Betätigen des Not-Aus-Schalters zu einer Absicherung führen. Komplizierteren Szenarien wird dieses Schema aber nicht gerecht.

Eine herkömmliche Möglichkeit der Konfiguration eines Sicherheitsschaltgerätes ist in der DE 100 200 75 C2 offenbart. Danach ist eine Reihe von Eingangs- und Ausgangsmodulen vorgesehen, wobei jedes Eingangsmodul Daten eines Sensors erhält und jedes Ausgangsmodul einen Aktor betätigen kann, der eine Gefahrenquelle ausschaltet. Die richtige Zuordnung von Sensoren zu einem Aktor erfolgt dadurch, dass die Positionen, an denen die Module in der Reihe angeordnet sind, eine eindeutige Zuordnung zu einem Ausgangsmodul bestimmen. Die Positionen geben also die Schaltregein vor und durch Einsetzen der Module kann ausgewählt werden, welche Sensoren auf welche Weise mit diesen Schaltregeln mit einem Aktor verbunden werden. Das erspart eine Programmierung, ermöglicht aber nicht die Lösung komplexer Sicherheitssteuerungsaufgaben. So ist der Einsatz auf einen kleinen Anwendungsbereich bei einfachen Maschinen begrenzt.

In einer Weiterbildung der herkömmlichen Konfiguration sind die Module mit einem Steuerungsmodul verbunden, das eine Zuordnungstabelle hält. Sämtliche Module sind dabei mit einem Bus untereinander verbunden. Die logischen Verknüpfungen, mit denen für einen Aktor entschieden wird, ob er schalten soll oder nicht, erfolgen dann in dem Steuerungsmodul. Nachteilig an dieser Lösung ist die Laufzeit der Datenkommunikation. Mit zunehmender Komplexität wird immer mehr Rechenzeit nur für Kommunikation auf dem begrenzten Datenbus benötigt.

Derartige Systeme sind deshalb für zeitkritische Anwendungen nur bedingt geeignet und müssen überdies mit hohem technischem Aufwand und hohen Kosten mit leistungsfähigen Mikrocontrollern ausgestaltet werden. Selbst wenn man das Problem der Ansprechzeit für eine bestimmte Anwendung in den Griff bekommt, erfordert es dann erneuten Zusatzaufwand oder ist gar unmöglich, der Modulreihe ein weiteres Ausgangsmodul anzufügen.

Es ist weiterhin bei modularen Sicherheitssteuerungssystemen bekannt, Statusinformationen der Eingänge, der Ausgänge und Logikergebnisse nach außen mitzuteilen. Dazu kann die Modulreihe mithilfe eines Gateways über einen Feldbus oder einen anderen Bus an externe Elektronik angekoppelt sein. Die Statusinformationen dienen dazu, die Funktionsfähigkeit der Sensoren zu überwachen oder die Sensordaten nachgeordneter Elektronik für weitere Auswertungen verfügbar zu machen. Auch hier stellt sich aber das Problem, dass die Gateways auf Prozessabbildinformationen eines Steuerungsmoduls zugreifen, wobei dies scheitert, wenn die Leistungsfähigkeit des Steuerungsmoduls nicht mehr ausreicht.

Außerhalb der Sicherheitstechnik ist aus der US 5 068 778 ein industrielles Steuerungssystem bekannt, welches mehrere Einschubgehäuse für jeweils mehrere I/O-Einsteckkarten aufweist. Jedes dieser Einschubgehäuse, von denen eines als Master fungiert, weist einen eigenen Prozessor auf, der mit verschiedenen Programmiersprachen zu einer multi-tasking-fähigen Steuerung beiträgt.

Es ist daher Aufgabe der Erfindung, ein erweiterbares modulares Sicherheitsschaltsystem anzugeben, das auch anspruchsvolle Sicherheitsanwendungen steuern kann.

Diese Aufgabe wird durch eine modulare Sicherheitsschaltvorrichtung und ein Sicherheitsschaltverfahren nach Anspruch 1 beziehungsweise 21 gelöst. Die Lösung hat den Vorteil, dass auch komplexere logische Verknüpfungen mit unterschiedlichen Prioritäten und Abhängigkeiten sowie zeitliches Variieren der Wirkung auf einen Aktor beziehungsweise ein geführtes Stoppen einer gefährlichen Bewegung an einer Maschine möglich sind. Zeitkritische Applikationen werden mit einer reduzierten Ansprechzeit gelöst. Der Anwender kann ohne Aufwand weitere Einheiten hinzufügen, wenn beispielsweise die Eingänge oder Ausgänge nicht mehr ausreichen, weil zusätzliche Sensoren oder Aktoren hinzukommen. Sollen nachträglich zusätzliche Maschinenteile abgesichert werden, so können sie einfach der bereits konfigurierten Modulreihe hinzugefügt werden.

Indem die Ausgangsmodule die ihnen zugeordneten Aktoren selbst steuern, wird der modulare Aufbau konsequent vorangetrieben. Nicht nur die Anschlüsse, auch die erforderliche "Intelligenz", also die Logikauswertungen, können modular zusammengesetzt werden. Damit können nicht nur einfache, sondern auch komplexe Auswertungsaufgaben beliebig kombiniert und ohne besonderen Aufwand für den Benutzer an neue Anwendungen angepasst werden. Mit Hilfe einer Parallelverarbeitung in den Ausgangsmodul-Steuerungen und der zentralen Steuerung können komplexe Überwachungsaufgaben schnell gelöst werden. Dabei werden Sensordaten für die Ansteuerung des Aktors dynamisch ausgewertet. Ein Beispiel dafür ist, den Abschaltvorgang einer Maschine zu überwachen, die einen Nachlauf hat, oder um Ereignisklassen danach zu differenzieren, ob sie ein Betätigen des Aktors benötigen oder nicht. Weitere Beispiele sind die Auswertungen einer Sicherheitskamera oder eines Lichtgitters, bei denen dynamisch Bereiche aus dem Schutzfeld ausgeblendet werden können. Solche Ausblendungen, also bekanntermaßen erlaubte Eingriffe, können Werkzeuge mit bekannten Bewegungsmustern oder durchfahrende Paletten sein.

Dabei geht die erfindungsgemäße Lösung von dem Grundgedanken aus, die Auswertungen für die Steuerung des Aktors zur Verkürzung von Ansprechzeiten mit möglichst kurzen Datenwegen vorzunehmen. Gerade komplexere Auswertungen sollen dem verursachenden Aktor beziehungsweise dessen Ausgangsmodul unmittelbar zugeordnet sein. Diese Auswertungen werden dann zumindest teilweise unmittelbar im Ausgangsmodul vorgenommen, während die zentrale Steuerung die gesamten anstehenden Auswertungen der Sicherheitsschaltvorrichtung kennt und diese zur Parallelverarbeitung auf diese zentrale Steuerung selbst und die Ausgangsmodule verteilt werden.

Bevorzugt ist die Ausgangsmodul-Steuerung für die Auswertung konfigurierbar. Damit ist ein Ausgangsmodul flexibel einsetzbar und kann für eine Vielzahl von Aufgaben programmiert werden. Die Modulreihe muss also nicht verändert, sondern nur neu konfiguriert werden.

Vorteilhafterweise ist die Konfiguration in einer Speichereinheit des jeweiligen Ausgangsmoduls oder der zentralen Speichereinheit abgelegt, und diese Speichereinheit ist insbesondere austauschbar. Das erleichtert die Konfiguration erheblich, da sie einmal nicht verloren geht, zum anderen durch bloßen Austausch der Speichereinheit neu eingestellt werden kann. Dabei kann sowohl jedes Ausgangsmodul eine eigene Speichereinheit haben, als auch die Konfiguration einer Speichereinheit nur der zentralen Steuerung oder nur einiger, nicht aller Ausgangsmodule ausgetauscht werden.

Dabei ist bevorzugt die Speichereinheit über einen Transponder mit der Ausgangsmodul-Steuerung oder der zentralen Steuerung verbunden. Dies ist eine besonders einfache und komfortable Art, kontaktlos den Austausch der Speichereinheit und damit der Konfiguration zu ermöglichen.

Bevorzugt ist der Sensor ein Überwachungssensor, insbesondere ein Laserscanner oder eine Sicherheitskamera, eine Lichtschranke, ein Lichtgitter oder ein Laserscanner, der Schalter ein Not-Aus-Schalter oder ein Türschalter und der Aktor eine Ausschalteinrichtung für eine Maschine oder eine Warneinrichtung und die Ausgangsmodul-Steuerung ist für die Auswertung für einen oder mehrere dieser Sensoren und/oder Aktoren konfigurierbar. Damit deckt die Modulreihe ein weites Spektrum der meisten bekannten anzuschließenden Komponenten ab.

Bevorzugt ist mindestens ein Eingangsmodul vorgesehen, das Eingänge für Sensoren und/oder Schalter aufweist, wobei jedes Eingangsmodul mit zumindest einem der Ausgangsmodule über den Bus oder über konfigurierbare Verbindungen verbunden ist. Eingangsmodule können auf den anzuschließenden Sensor zugeschnitten werden und mit dessen Formaten vermitteln, dazu einfache Vorverarbeitungen wie Filtern und dergleichen vornehmen. Sie können auch schlicht dazu dienen, die Anschlusszahl des Ausgangsmoduls modular durch Anschluss eines oder mehrerer Eingangsmodule zu vergrößern.

Vorteilhafterweise weist das Ausgangsmodul Eingänge für Sensoren und/oder Schalter auf. Auf diese Weise kann das Ausgangsmodul ohne jeglichen Zeitverlust auf die Eingänge reagieren und in besonders einfachen Anwendungen im Einzelfall zusammen mit der zentralen Steuerung sogar die ganze Modulreihe ersetzen.

Bevorzugt bildet die zentrale Steuerung ein Steuerungsmodul. Dann kann sie ohne weiteren Aufwand auch optisch und von ihrem Raumbedarf in die Modulreihe integriert werden.

Bevorzugt ist ein Gatewaymodul vorgesehen, über das die Eingangsmodule, die Ausgangsmodule und/oder das Steuerungsmodul mit einem externen Bus verbunden werden, insbesondere einem Feldbus, wobei der externe Bus mit einer externen Steuerung verbunden ist. Damit können die Daten der Modulreihe extern für Test- oder Anzeigezwecke verfügbar gemacht werden und die externe Steuerung kann redundante oder zusätzliche Steuerungsaufgaben übernehmen. Die Modulreihe lässt sich so auf einfache Weise in ein Steuerungskonzept integrieren und weiterhin können die Sensordaten auch für Auswertungen verwendet werden, die nicht unmittelbar mit der Ansteuerung der Aktoren zu tun hat. Dazu kann etwa eine Anzeige der Sensorzustände zählen.

Vorteilhafterweise ist die externe Steuerung für einen Funktionstest der Module und der angeschlossenen Sensoren ausgebildet. Die Überprüfung des sicheren Arbeitens der Vorrichtung ist ebenfalls eine Anforderung der Sicherheitstechnik.

Bevorzugt ist die externe Steuerung für eine externe Ansteuerung der oder einiger Aktoren ausgebildet, wobei die Ansteuerung nur auf den Aktor wirkt, wenn die zentrale Steuerung und/oder die Ausgangsmodul-Steuerung eines dem Aktor zugeordneten Ausgangsmoduls der Ansteuerung zustimmt. Die externe Steuerung übernimmt somit zumindest zum Teil die Ansteuerung der Aktoren für den gewöhnlichen Betrieb. Die Sicherheitsschaltvorrichtung betrifft diese für den gewöhnlichen Betrieb erforderlichen Ansteuerungen normalerweise nicht. In dem Fall aber, dass die Sicherheitsschaltvorrichtung einen sicherheitsrelevanten Ausnahmezustand erkannt hat, kann sie wegen der stets erforderlichen Zustimmung eine Ansteuerung verhindern. Sie hat quasi das letzte Wort, um die Sicherheit zu gewährleisten, muss mit dem sonstigen Betrieb aber nichts zu tun haben.

Vorteilhafterweise kann ein Einschaltsignal der Ausgangsmodul-Steuerung an den zugeordneten Aktor erst nach einer Freigabe von der zentralen Steuerung und/oder der externen Steuerung wirksam werden. Das Abschaltsignal wird auf dem kürzesten Weg sehr schnell gegeben, um sofort auf eine Gefahr zu reagieren. Die Entscheidung, ob das die Gefahr auslösende Problem beseitigt ist, kann aber das Ausgangsmodul nicht unbedingt allein treffen. Daher wird in dieser Ausführungsform ein Signal einer übergeordneten Steuerung abgewartet. Das typische Beispiel ist eine Freigabe nach einer Überprüfung der Anlage wegen eines vorhergehenden Abschaltens, die oftmals auch nicht von dem Bedienpersonal selbst, sondern einem für die Sicherheit Verantwortlichen etwa per Passwort oder Schlüssel autorisiert sein muss.

Bevorzugt ist die Ausgangsmodul-Steuerung für eine zu der zentralen Steuerung verteilte, diversitäre und/oder redundante Auswertung ausgebildet. Dies kann einerseits der Beschleunigung der Auswertung dienen, andererseits ermöglicht es einfachere Bauweisen der Ausgangsmodul-Steuerungen. Eine diversitäre bzw. redundante Auswertung reduziert mögliche Fehler und erfüllt damit Anforderungen der Sicherheitstechnik.

Vorteilhafterweise sind das Eingangsmodul, das Ausgangsmodul, die zentrale Steuerung und der Bus insbesondere durch zweikanalige Ausführung fehlersicher ausgeführt. Dies ist erneut eine Anforderung an die Ausfallsicherheit der Modulreihe, wobei zweikanalige Ausführung eine robuste Umsetzung darstellt.

Bevorzugt ist jedes Modul in einem gleichartigen Gehäuse mit jeweils einem Stecker und einer Buchse zum Ineinanderstecken angeordnet. Ein derartiges Gehäuse ist dem modularen Aufbauprinzip besonders gut angepasst und ermöglicht jederzeit und auf einfache Weise eine Erweiterung oder Umordnung der Modulreihe.

Bevorzugt kann die Ausgangsmodul-Steuerung und/oder die zentrale Steuerung über einen Drehschalter oder ein Bedienelement konfiguriert werden. Diese können am Gehäuse angebracht sein, so dass dieses kompakt und einfach herzustellen ist und zugleich die Bedienelemente dem Benutzer zugänglich macht.

Vorteilhafterweise kann das Ausgangsmodul und/oder die zentrale Steuerung einen Anschluss für ein Mobiltelefon, einen Computer oder einen PDA aufweisen, mittels dessen die Ausgangsmodul-Steuerung und/oder die zentrale Steuerung über eine Grafikoberfläche konfiguriert werden kann. Auf diese Weise kann der Benutzer flexibel und ohne tiefere Kenntnisse des internen Aufbaus die Modulreihe für seine spezielle Anwendung aufbauen und anpassen.

Bevorzugt ist der Anschluss eine feste Verbindung, wie eine serielle Schnittstelle oder eine drahtlose Verbindung insbesondere über Bluetooth, wLAN, GSM, UMTS oder Infrarot. All dies sind bewährte Anschlüsse, die einerseits bei fester Verbindung eine kostengünstige und sichere, andererseits bei drahtloser Verbindung eine besonders benutzerfreundliche Lösung bieten.

Bevorzugt weist die zentrale Steuerung und/oder die Ausgangsmodul-Steuerung einen Webserver auf. Webserver sind als Komplettlösungen verfügbar und bieten eine komfortable und flexible Möglichkeit der Konfiguration mit Zugriff über einen üblichen Web-Browser statt einer proprietären Konfigurationssoftware.

Das erfindungsgemäße Verfahren kann mit analogen Merkmalen fortgebildet werden, wie sie beispielhaft, aber nicht abschließend, in den sich anschließenden Unteransprüchen angegeben sind und zeigt dabei ähnliche Vorteile.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: ein Blockschaltbild einer ersten Ausführungsform der erfindungsgemäßen Sicherheitsschaltvorrichtung;
- Fig. 2a: ein Blockschaltbild eines Eingangsmoduls mit konfigurierten Modulkommunikations-Ausgängen;
- Fig. 2b: ein Blockschaltbild eines Eingangsmoduls mit Anschluss an einen internen Bus;
- Fig. 3a: ein Blockschaltbild eines Ausgangsmoduls mit konfigurierten Modulkommunikations-Eingängen;
- Fig. 3b: ein Blockschaltbild eines Ausgangsmoduls mit Anschluss der Sensoren über den internen Bus;
- Fig. 3c: ein Blockschaltbild eines Ausgangsmoduls mit eigenen Sensoreingängen; und
- Fig.4: ein Blockschaltbild einer zweiten Ausführungsform der erfindungsgemäßen Sicherheitsschaltvorrichtung mit einem Gatewaymodul zum Anschluss an einen Feldbus.

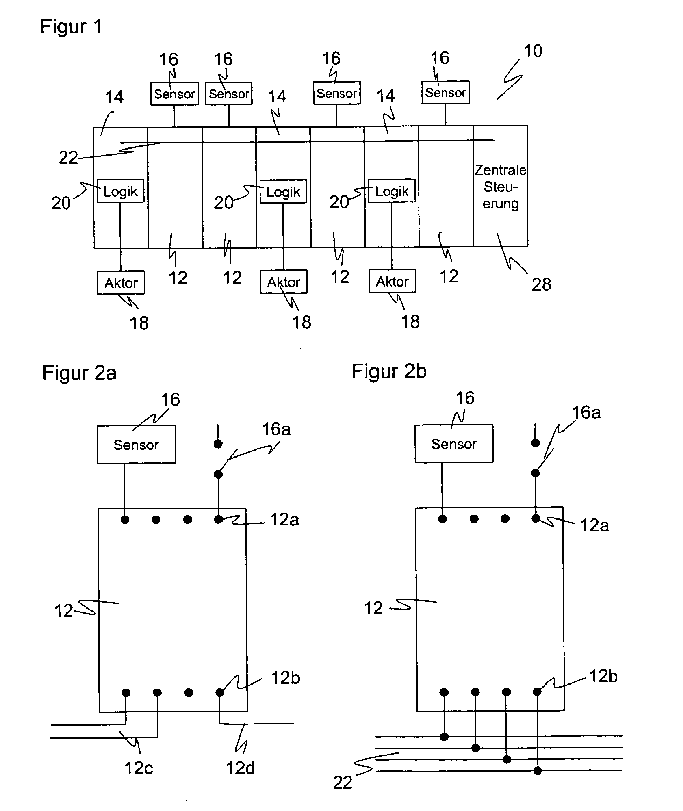

Eine erste Ausführungsform der erfindungsgemäßen Sicherheitsschaltvorrichtung 10 ist in Figur 1 dargestellt. Die Sicherheitsschaltvorrichtung 10 ist hier beispielhaft aus vier Eingangsmodulen 12 und drei Ausgangsmodulen 14 aufgebaut.

Jedes Eingangsmodul 12 hat wenigstens einen ein- oder mehrkanaligen Eingang beziehungsweise eine Anschlussmöglichkeit für einen oder mehrere Sensoren 16. Als Sensor 16 kann ein Überwachungssensor wie eine Lichtschranke, ein Lichtgitter, ein Laserscanner oder eine Sicherheitskamera, aber auch ein Schalter wie ein Türpositionsschalter oder ein Not-Aus-Schalter vorgesehen sein. Das Eingangsmodul 12 wird später im Zusammenhang mit der Figur 2 genauer erläutert.

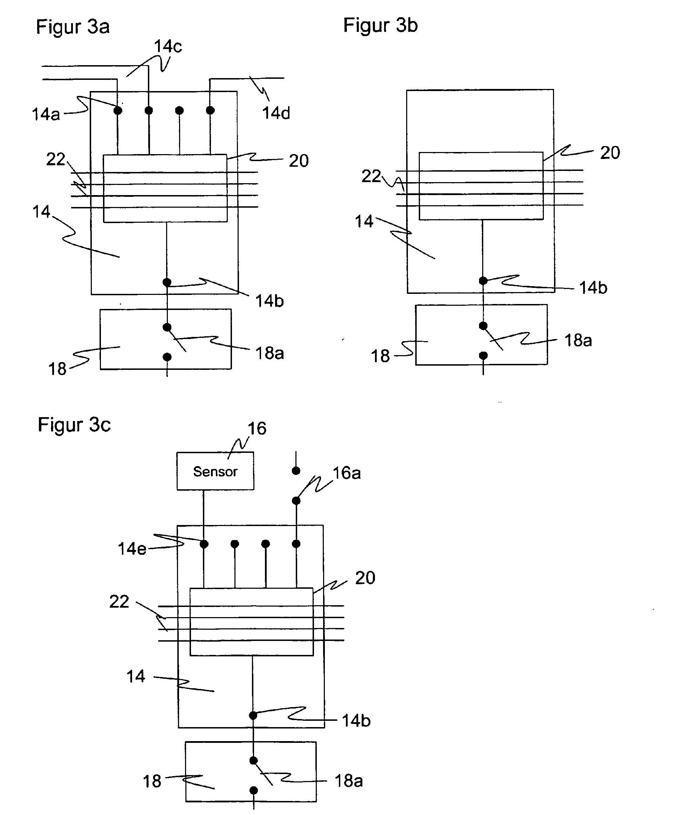

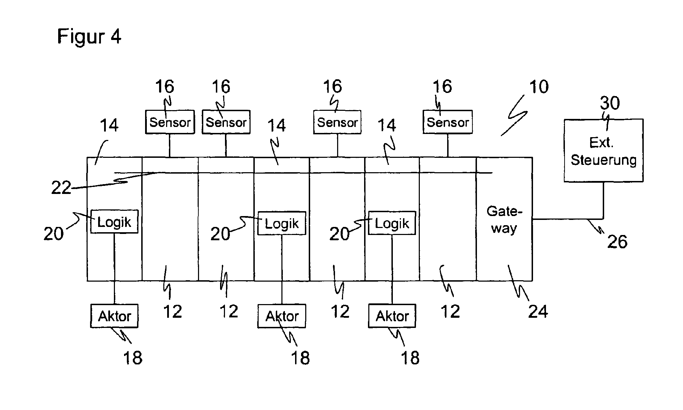

Entsprechend hat jedes Ausgangsmodul 14 wenigstens einen ein- oder mehrkanaligen Ausgang für einen Aktor 18. Dieser Aktor 18 kann ein Roboter, ein Motor, eine Stromleitung oder eine Maschine wie eine Fräse oder eine Presse sein. Unter einem Betätigen des Aktors 18 soll hier nicht dessen normaler Betrieb verstanden werden, sondern eine besondere Ansteuerung durch die Sicherheitsschaltvorrichtung 10, um den Aktor 18 in einen sicheren Zustand zu bringen. Das kann ein einfaches Abschalten, aber auch eine Warnung oder das gesteuerte Verbringen in eine sichere Parkposition sein. Wird der Aktor 18 nicht betätigt, so bedeutet dies demnach nicht Stillstand, sondern gewöhnlichen, ungestörten Betrieb. Auch das Ausgangsmodul 14 wird weiter unten im Zusammenhang mit der Figur 3 noch näher erläutert. Dieses Verständnis hindert nicht, dass auch andere Ansteuerungen von dem oder über das Ausgangsmodul 14 an den Aktor 18 gehen, wie weiter unten im Zusammenhang mit einer zusätzlichen externen Steuerung gemäß Figur 4 noch beschrieben ist.

Die Eingangsmodule 12 sind jeweils mit bestimmten Ausgangsmodulen 14 verbunden. Diese Zuordnung hängt von der Anwendung ab, denn jeder Aktor 18 soll abhängig von den Zuständen bestimmter Sensoren 16 betätigt werden.

Beispielsweise kann ein Eingangsmodul 12 mit einem angeschlossenen Überwachungssensor 16 und ein zweites Eingangsmodul 12 mit einem angeschlossenen Türpositionsschalter 16 auf ein Ausgangsmodul 14 verschaltet sein, das eine gefährliche Maschine 18 in einen ungefährlichen Zustand bringen kann. Dies entspräche der Situation, in der die gefährliche Maschine 18 sowohl durch eine geschlossen zu haltende Tür als auch durch einen Überwachungssensor abgesichert ist. Dabei kann jedes Eingangsmodul 12 auch auf mehrere Ausgangsmodule 14 verschaltet sein, beispielsweise könnte ein Ansprechen des Türpositionsschalters 16 nicht nur die gefährliche Maschine 18 abschalten, sondern über ein anderes oder einen zweiten Ausgang des gleichen Ausgangsmoduls 14 zugleich einen Alarm auslösen.

Alternativ können die Eingangsmodule 12 auch an einen Bus 22 angeschlossen sein, an den sie ihre Daten übergeben, wobei dann in jedem Ausgangsmodul 14 entschieden wird, ob die Daten für dieses Ausgangsmodul 14 relevant sind. Unabhängig davon, ob die Daten durch eigens verknüpfte Verbindungen oder über den Bus 22 ausgetauscht werden, kann die richtige Zuordnung vom Anwender konfiguriert werden. In einfachen Fällen kann dies mithilfe von Drehschaltern an den Modulen 12, 14 geschehen. Komfortabler und flexibler ist eine Programmierung über ein Programmiertool vorzugsweise mit grafischer Benutzeroberfläche, das weiter unten noch beschrieben wird.

Jedes Ausgangsmodul 14 weist eine eigene Ausgangsmodul-Steuerung 20 auf (in der Figur 1 mit "Logik" bezeichnet). Diese Ausgangsmodul-Steuerung 20 wertet die über die angeschlossenen Eingangsmodule 12 übermittelten Daten der Sensoren 16 aus, um zu entscheiden, ob der zugehörige Aktor 18 zu betätigen ist. Die Art der Auswertung ist dabei konfigurierbar.

Komplexe Auswertungen benötigen ausreichende Rechenleistungen der Ausgangsmodul-Steuerung 20. So können Rückmeldungen des Aktors 18 zu berücksichtigen sein, die also durch einen eigenen Sensor 16 und dessen Eingangsmodul 14 überwacht werden.

Ein Beispiel für komplexe Aufgaben der Ausgangsmodul-Steuerung 20 ist eine Bewegungsüberwachung, bei der ein Roboter oder sonst eine Maschine ein vorgegebenes Bewegungsschema einhalten soll. Wird die Bewegung unkontrolliert oder zu schnell, so muss die Sicherheitsschaltvorrichtung 10 sofort reagieren können. Ein anderer Fall ist ein Überwachungssensor 16, der nicht einfach auf eine Erfassung eines Objekts reagieren soll, sondern das Objekt zunächst nach seiner Größe, Lage oder Bewegung klassifiziert. Damit können nämlich Szenarien vorgesehen sein, in denen bestimmte Objekteingriffe erlaubt sind. Dazu zählen bekannte Bewegungsmuster von Werkzeugen oder Maschinen, das Durchfahren einer Palette, Ignorieren sehr langsamer Bewegungen oder unterschiedliche Behandlung von Objekten in der Nähe, gegenüber Objekten weiter weg von Bedienpersonal. Weitere Beispiele sind das sogenannte "Muting/Blanking" von Lichtschranken oder Lichtgittem, die Überwachung von Nockenschaltwerken von Pressen oder die Drehzahl- beziehungsweise Stillstandsüberwachung von Motoren. Alle diese Überwachungsaufgaben können auch mit einer Sicherheitskamera durchgeführt werden, die dann sehr große Datenmengen liefert, die in Echtzeit auszuwerten sind. Die Komplexität erhöht sich, wenn die Kamera entfernungsauflösend ist und ein dreidimensionales Bild liefert. Dazu kann eine Stereokamera, aber auch eine triangulierende oder die Lichtlaufzeit bestimmende Kamera dienen.

Um solche komplexeren Auswertungsregeln zu implementieren, kann die Ausgangsmodul-Steuerung 20 applikationsspezifisch eingerichtet sein, so dass sie derartige komplexere Sicherheitslogikfunktionen bereits zusammenfassend löst. Eine solche applikationsspezifische Lösung kann dann bereits werkseitig vorkonfiguriert sein oder dem Benutzer für die Konfiguration zur Auswertung angeboten werden. Die Ausgangsmodul-Steuerung 20 ist also nicht nur in der Lage, einfache logische Verknüpfungen vorzunehmen, sondern kann auch kompliziertere zeitabhängige Signalmuster an den Modulkommunikations-Eingängen erkennen, klassifizieren und vergleichen.

Dazu weist jedes Ausgangsmodul 14 in einer besonderen Ausführungsform ein in der Figur nicht dargestelltes Speichermodul auf. Darin ist die Konfiguration für die Auswertung abgelegt. Allein durch Austausch des Speichermoduls kann dann die Ausgangsmodul-Steuerung 20 auf eine völlig neue Aufgabe eingestellt werden. Der Datenaustausch mit dem Speichermodul kann dabei mit Steckkontakt oder auf Transponderbasis kontaktlos ausgeführt werden. Alternativ kann auch nur ein Teil der Ausgangsmodule 14 oder nur die zentrale Steuerung 28 ein derartiges Speichermodul aufweisen. Die Konfiguration wird dann über den Bus 22 den zuständigen Ausgangsmodulen 14 kommuniziert.

Neben den Eingangsmodulen 12 und den Ausgangsmodulen 14 ist ein zentrales Steuerungsmodul 28 in der Sicherheitsschaltvorrichtung 10 vorgesehen. Das Steuerungsmodul 28 steht über den Datenbus 22 mit den Eingängen der Eingangsmodule 12 und den Ausgangsmodul-Steuerungen 20 in Verbindung. Während die Ausgangsmodul-Steuerungen alle Auswertungen übernehmen, die mit den zugehörigen Sensoren 16 und Aktoren 18 ihres Ausgangsmoduls 14 zusammenhängen, kann das Steuerungsmodul 28 "Master"-Befehle wie ein Not-Aus an alle Ausgangsmodule 14 geben. Über den Bus 22 kann es aber auch zur redundanten oder entlastenden verteilten Auswertung die Ausgangsmodul-Steuerungen 20 unterstützen und Aufgaben zuweisen. Ist etwa die Ausgangsmodul-Steuerung 20 des einen Ausgangsmoduls 14 überlastet, so können einzelne Aufgaben der zentralen Steuerung 28 oder einem anderen Ausgangsmodul 14 übertragen werden, das die Ergebnisse zurückgibt.
Das Steuerungsmodul 28 ermöglicht also als Ergänzung zu der streng modularen Auswertung in den einzelnen Ausgangsmodul-Steuerungen 20 eine hierarchische Steuerung. Die Auswertungsaufgaben werden, je nachdem wie zeitkritisch und komplex sie sind, auf das Steuerungsmodul 28 und die Ausgangsmodul-Steuerungen 20 verteilt. Dazu können Auswertungsregeln, Auswertungen und Teilauswertungen über den Datenbus 22 zwischen den Ausgangsmodul-Steuerungen 20 und mit dem Steuerungsmodul 28 ausgetauscht werden. Außerdem kann das Steuerungsmodul 28 Zusatzaufgaben wie die Überwachung der Funktionsfähigkeit der Module 12,14 mit ihren angeschlossenen Sensoren 16 und Aktoren 18 erfüllen.

Die Modulkommunikation zwischen Eingangsmodulen 12 und Ausgangsmodulen 14 kann einerseits wie oben beschrieben durch eine konfigurierbare Zuordnung von Eingängen und Ausgängen erfolgen. Alternativ können aber auch sämtliche Module 12,14 an einen internen Bus 22 angeschlossen sein. In diesem Fall entscheiden die Auswertungsregeln in der Ausgangsmodul-Steuerung 20 über die Zuordnung zwischen Eingangsmodulen 12 und Ausgangsmodulen 14 und zwischen Sensoren 16 und Aktoren 18. Die derart ausgewählten Daten werden über den Bus 22 von einem Eingangsmodul 12 an die zugeordneten Ausgangsmodule 14 weitergegeben.

Über den Bus 22 können die Ausgangsmodul-Steuerungen 20 der Ausgangsmodule 14 Auswertungsregeln auch ohne den Umweg über das Steuerungsmodul 28 austauschen und sich damit gegenseitig konfigurieren, aber auch Logikergebnisse, also Zwischenergebnisse der Auswertung, weiterreichen. Auf diese Weise ist eine verteilte oder eine redundante Auswertung zur Beschleunigung beziehungsweise erhöhten Sicherheit möglich. Ein besonders komplex auszuwertender Sensor 16 wie eine Sicherheitskamera kann dann zur Erhöhung der Rechenleistung auch von mehreren Ausgangsmodulen 14 bzw. deren Ausgangsmodul-Steuerungen 20 ausgewertet werden.

Jedes Modul 12, 14, 28 ist nach einer Ausführungsform in einem gleichartigen Gehäuse untergebracht. Das Gehäuse kann dabei ein IP20-Gehäusesystem sein, bei dem die einzelnen Module mit einem Rückwandbus als Datenbus 22 miteinander in Verbindung stehen. Alternativ kann je nach Anforderung das Gehäuse auch in einer höheren Schutzklasse wie beispielsweise IP65 ausgeführt sein. Die Gehäuse sind jeweils mit einem Stecker und einer Buchse zum Ineinanderstecken versehen. Auf diese Weise kann eine Modulreihe des gewünschten Aufbaus und der gewünschten Länge in einfacher Weise zusammengesteckt werden.

Die Sicherheitsschaltvorrichtung 10 ist durch ihren modularen Aufbau einfach an neue oder sich verändernde Anwendungen anzupassen. Je nachdem, wie viele Ausgänge, Eingänge oder welche Art von Logikfunktionen beziehungsweise Auswertungen benötigt werden, können der Sicherheitsschaltvorrichtung 10 weitere Module 12, 14 hinzugefügt werden.

Zur Anpassung an die Anwendung sind dann zwei Konfigurationsschritte notwendig: Es muss erstens festgelegt werden, auf welche Ausgangsmodule 14 die Eingangsmodule 12 verschaltet sind bzw. welche Sensoren 16 bei der Entscheidung über das Schalten welchen Aktors 18 zu berücksichtigen sind und zweitens welche Auswertungsregeln jedes Ausgangsmodul 14 bei der Auswertung verwendet. Für weniger komplexe Konfigurationen können Drehschalter oder andere Bedienelemente an den Ausgangsmodulen 14 vorgesehen sein.

Als Alternative insbesondere für komplexere Konfigurationen ist ein Programmiertool mit einer grafischen Benutzeroberfläche vorgesehen. Die Benutzeroberfläche bietet dafür grafische Darstellungen für eine Reihe von Bausteinen wie Eingangsmodule 12 oder Ausgangsmodule 14 an, die am Bildschirm zu der gewünschten Reihe zusammengesetzt und verbunden werden können. Die Auswertungsregeln für die Ausgangsmodul-Steuerung 20 stehen auf der Benutzeroberfläche zur Auswahl zur Verfügung. Sie können am Bildschirm in der gewünschten Weise verknüpft und dem Ausgangsmodul 14 zugewiesen werden.

Die Verbindung zu der Benutzeroberfläche kann durch Anschluss eines Computers, eines Mobiltelefons, eines PDAs oder eines ähnlichen Geräts erfolgen, auf dem das Programmiertool mit der Benutzeroberfläche läuft. Die Verbindung kann eine feste Verbindung über eine serielle Schnittstelle wie RS232 oder USB, alternativ eine drahtlose Verbindung über Bluetooth, Infrarot oder wLAN sein. Zur einfachen und benutzerfreundlichen Bedienung kann die Umsetzung einer gewünschten Anwendung, also die Auswahl und Verteilung der konkreten Auswertungsregeln auf die verschiedenen Ausgangsmodule 14, automatisch mithilfe des Programmiertools erfolgen. Der Benutzer gibt dabei auf einer relativ hohen Abstraktionsstufe Auswertungsziele vor und er sieht auch nicht notwendig, welche Module 12, 14 dafür notwendig sind, wie sie anzuordnen und wie zu konfigurieren sind.

Je nach Erfahrung des Benutzers kann die konkrete Implementierung in den Ausgangsmodul-Steuerungen 20 sowie die konkrete Zuweisung zu einem bestimmten Ausgangsmodul 14 auch in der Erfahrung entsprechend abgestufter Weise bis ins Detail vorgenommen werden.

Für eine besondere Ausführungsform des Programmiertools ist in jeder Ausgangsmodul-Steuerung 20 ein eigener Webserver implementiert. Dann kann das Programmierwerkzeug von dem Computer, Mobiltelefon oder PDA aus mit Hilfe eines üblichen Web-Browsers aufgerufen werden. Ein speziell eingerichtetes Wartungsgerät ist somit nicht mehr erforderlich, alle spezifischen Eigenschaften des Programmiertools können in der Ausgangsmodul-Steuerung 20 und deren Webserver implementiert sein.

In den Figuren 2a und 2b ist ein Eingangsmodul 12 dargestellt. Gleiche Bezugszeichen bezeichnen hier und im Folgenden gleiche Merkmale. Mit den Eingängen 12a können Sensoren 16 verbunden werden. Dies kann ein eigentlicher Sensor 16 oder ein Schalter 16a sein. Beispiele hierfür sind oben angegeben. Das dargestellte Eingangsmodul 12 weist vier Eingänge 12a auf, von denen zwei verwendet sind. Selbstverständlich sind Ausführungsformen mit einer abweichenden Anzahl von Eingängen 12a möglich.

Das Eingangsmodul 12 hat außerdem eine Anzahl von Modulkommunikations-Ausgängen 12b. Beispielhaft sind bei der Ausführungsform gemäß Figur 2a zwei von vier Modulkommunikations-Ausgängen 12b mit nach links angeordneten Ausgangsmodulen 14 und ein Modulkommunikations-Ausgang 12b mit einem nach rechts angeordneten Ausgangsmodul 14 verbunden. Figur 2b zeigt eine alternative Ausführungsform, bei der die Modulkommunikations-Ausgänge 12b mit dem Datenbus 22 verbunden sind. Die Zuordnungen zu Ausgangsmodulen 14 treffen dann die entsprechenden Ausgangsmodul-Steuerungen 20.

Mit dem Datenbus 22 können auch die Eingänge 12a verbunden sein. Sämtliche Daten der Sensoren 16, nicht nur die für die Betätigung von Aktoren 18 interessanten Daten, sind dann auch außerhalb des Eingangsmoduls 12 verfügbar. Dies kann beispielsweise dafür genutzt werden, die Funktionsfähigkeit der Sensoren 16 zu überprüfen oder deren Zustandsdaten anzuzeigen.

Die Figuren 3a-c zeigen ein Ausgangsmodul 14. An dessen Modulkommunikations-Eingängen 14a ist das Ausgangsmodul 14 mit Eingangsmodulen 12 verbunden. Bei der in Figur 3a dargestellten Ausführungsform hat das Ausgangsmodul 14 nach links Verbindungen 14c zu zwei Eingangsmodulen 12 und nach rechts eine Verbindung 14d zu einem weiteren Eingangsmodul 12. Die Ausgangsmodul-Steuerung 20 selbst ist zur Kommunikation mit anderen Ausgangsmodulen 14 und der zentralen Steuerung 28 an den Datenbus 22 angeschlossen. Bei der in Figur 3b dargestellten Ausführungsform ist auch die Verbindung zu den Eingangsmodulen 12 über den Datenbus 22, statt über direkte Modulkommunikations-Eingänge 14a realisiert.

Die Ausgangsmodul-Steuerung 20 empfängt Daten von den zugeordneten Eingangsmodulen 12 (oder selektiert selbst die benötigten Daten, die über den Datenbus 22 empfangen werden) über die Modulkommunikations-Eingänge 14a. Die Ausgangsmodul-Steuerung 20 wird entsprechend der Anforderungen für Sicherheitsprodukte mittels einer zweikanaligen Mikrocontrollerstruktur ausgestaltet, die neben der Ein- und Ausgangsbearbeitung die Logikberechnungen ausführt und gegebenenfalls die Datenkommunikation mit dem Datenbus 22 unterhält. Da die Ausgangsmodul-Steuerung 20 nur die Auswertungsaufgaben ihres einen Ausgangsmoduls 14 auszuführen hat, kann bei der Auswahl der Mikrocontroller auf kostengünstige Leistungsklassen zurückgegriffen werden. Ausnahme sind Ausgangsmodule für besonders komplexe Auswertungen wie Sicherheitskameras oder die Bereitstellung eines "Rechenpuffers" für die verteilte Auswertung gemeinsam mit anderen Ausgangsmodulen und/oder der zentralen Steuerung 28. Denkbar ist auch eine einkanalige Sicherheitsarchitektur mit einem leistungsfähigeren Mikrocontroller, der intern diversitäre, redundante oder sonst sicherere Auswertungen vornimmt. Entsprechende Sicherheitsanforderungen für die Steuerungskategorie sind in der Norm EN 954-1 bzw. ISO 13849 (performance level) festgelegt. Die damit mögliche Sicherheitsstufe und die weiteren Sicherheitsanforderungen an eine Anwendung sind in der Norm EN 61508 bzw. EN 62061 definiert.

Gemäß ihren Auswertungsregeln und der Zuordnung entscheidet die Ausgangsmodul-Steuerung 20, ob über den Ausgang 14b der Aktor 18 zu betätigen ist. Dies ist durch einen Schalter 18a angedeutet. Das Ausgangsmodul 14 ist jeweils mit einem Aktor 18 und dem ihm zugeordneten Ausgang 14b dargestellt. Davon abweichend ist natürlich auch möglich, mehrere Aktoren 18 an ein Ausgangsmodul 14 anzuschließen und dies entsprechend in der Ausgangsmodul-Steuerung 20 zu berücksichtigen.

Die Figur 3c zeigt eine Ausführungsform des Ausgangsmoduls 14, welches direkt über eigene Eingänge 14e mit einem Sensor 16 oder einem Schalter 16a verbunden ist. Das Ausgangsmodul 14 kann auf diese Weise zugleich Aufgaben des Eingangsmoduls 12 übernehmen. Für besonders einfache Anwendungen kann dieses Ausgangsmodul 14 zusammen mit dem Steuerungsmodul 28 bereits die gesamte Modulreihe ersetzen. Es ist auch möglich, dass in einer Mischform neben den direkten Eingängen 14e für Sensoren auch die Modulkommunikations-Eingänge 14a vorhanden sind. Die Ausführungsform gemäß Figur 3c macht für bestimmte Anwendungen eines der Eingangsmodule 12 verzichtbar.

Um den Anforderungen der Sicherheitstechnik an Ausfallsicherheit zu genügen, sind Eingänge und Ausgänge der Module 12, 14 fehlersicher ausgeführt. Eine robuste und einfache Möglichkeit der Implementierung sind zweikanalige Eingänge und Ausgänge. In einer alternativen Ausführungsform ist auch denkbar, das gesamte System einkanalig zu realisieren. Dann kann durch Redundanzen oder sonstige besondere Auslegung in der Ausgangsmodul-Steuerung 20 und/oder der zentralen Steuerung 28 die hohe Sicherheit gewährleistet werden. Die Anforderungen an die Schaltsicherheit sind bekannt und können erneut dem genannten Normen wie der EN 954-1 entnommen werden. Bei der Ausführungsform mit einem Datenbus 22 sollte auch dieser entsprechend sicher ausgeführt sein.

Figur 4 zeigt eine weitere Ausführungsform der Erfindung. Diese Ausführungsform unterscheidet sich von derjenigen, die unter Bezugnahme auf die Figur 1 beschrieben wurde, durch ein zusätzliches Gatewaymodul 24. Über das Gatewaymodul 24 kann die Sicherheitsschaltvorrichtung 10 mit einem externen Feldbus 26 verbunden werden. Der interne Datenbus 22 ist also über das Gatewaymodul 24 an den Feldbus 26 angekoppelt, um über den Feldbus 26 den direkten Datenzugriff auf alle Ausgangsmodule 14 beziehungsweise deren Ausgangsmodul-Steuerungen 20, alle Eingangsmodule 12 beziehungsweise die Daten von deren angeschlossenen Sensoren 16 und das Steuerungsmodul 28 zugreifen zu können. Alternativ kann auch der Datenbus 22 als Feldbus ausgebildet sein. Damit wird eine Ausführungsform als verteiltes, dezentrales System vereinfacht. Der Feldbus 26 erleichtert auch Möglichkeiten, ein Zustandsbild der Sicherheitsschaltvorrichtung 10 und aller angeschlossenen Sensoren 16 und Aktor 18 nach extern zu kommunizieren und dort auszuwerten oder anzuzeigen.

Es ist in einer weiteren Ausführungsform der Erfindung möglich, dass die oder Teile der Aufgaben des Steuerungsmoduls 28 stattdessen von einer externen Steuerung 30 an dem Feldbus 26 übernommen werden. Das betrifft in erster Linie Steuerungsaufgaben, die nicht sicherheitsrelevant sind, also den gewöhnlichen Betrieb der Sensoren 16 und Aktoren 18. Die externe Steuerung 30 kann beispielsweise den laufenden Betrieb eines Motors als Aktor 18 steuern, ohne dass dies für die Sicherheitsschaltvorrichtung 10 relevant ist. Sobald aber ein dem Aktor 18 zugeordnetes Ausgangsmodul 14 oder die zentrale Steuerung 28 eine Gefahr erkannt hat, muss die Ansteuerung aus der externen Steuerung 30 wirkungslos bleiben. Die Ansteuerungen der externen Schaltung 30 bedürfen daher einer Zustimmung des Ausgangsmoduls 14 und/oder der zentralen Steuerung 28. Das kann etwa in Form eines Schalters, einer logischen Verknüpfung oder eines erforderlichen Zustimmungssignals erfolgen. Die Kommunikation erfolgt dabei zwischen Ausgangsmodul 14, zentraler Steuerung 28 und externer Steuerung 30 über den Feldbus 26 und das Gatewaymodul 24 bzw. intern über den Datenbus 22.

Umgekehrt können Daten der Sensoren 16 und Aktoren 18 auf diesen Datenwegen auch an die externe Steuerung 30 gegeben werden, um ein Zustandsbild der Anlage anzuzeigen, sie zu konfigurieren oder die Anlage beziehungsweise ihre Komponenten auf Funktionsfähigkeit zu prüfen.

Damit ein Ausgangsmodul 14 sehr schnell auf eine Gefahr reagieren kann, schaltet es in einer vorteilhaften Ausprägung selbst einen zugeordneten Aktor 18 ohne Rückmeldung der zentralen Steuerung 28 oder gar der externen Steuerung 30, die mit sicherheitsrelevanten Steuerungen im Normalfall nicht befasst ist. Der extrem kurze Schaltweg ermöglicht eine sehr schnelle Reaktion bei kürzester Ansprechzeit. Umgekehrt darf aber beim Einschalten oder Zurückfahren in einen Betriebszustand nach einem derartigen Ausschaltvorgang das Ausgangsmodul 14 nicht allein entscheiden, dass der Betrieb wieder aufgenommen wird. Das Ereignis, durch welches das Ausschalten ausgelöst wurde, kann weitere Einheiten betroffen haben und muss zuvor zumindest von einer übergeordneten Einheit wie der zentralen Steuerung 28 oder der externen Steuerung 30 als beseitigt angesehen sein. Denkbar ist auch, dass zunächst eine Freigabe durch eine für die Sicherheit verantwortliche Person vorgenommen wird. Daher wirkt ein Einschaltbefehl des Ausgangsmoduls 14 erst dann auf den Aktor 18, wenn auch aus der übergeordneten Einheit eine Freigabe erfolgt. Dies kann etwa durch eine UND-Verknüpfung eines ersten Einschaltsignals des Ausgangsmoduls 14 und eines zweiten Einschaltsignals der übergeordneten Einheit erreicht werden.

Das schnelle direkte Ausschalten gemäß der zuletzt beschriebenen Ausführungsform kombiniert sich besonders vorteilhaft mit dem zuvor beschriebenen Ausgangsmodul 14, das selbst Eingänge 14e für Sensoren 16 oder Schalter 16a aufweist, weil dann alle Schaltwege, auch die zum Erhalt der relevanten Daten, besonders sind und deshalb eine besonders kurze Ansprechzeit ermöglichen.

Durch die Verteilung der einzelnen Logikaufgaben auf die Ausgangsmodule 14 entstehen kleine logische Einheiten (Logik-Auswertungsmodule), die mit geringem technischen Aufwand und geringen Herstellungskosten auch komplexe Systemaufgaben lösen können. Es entsteht eine hohe Granularität, die es dem Anwender ermöglicht, jederzeit die für ihn optimalen Komponenten, also Sensoren 16 und Aktoren 18, einzusetzen und dabei den Vorteil und die Leistungsfähigkeit eines programmierbaren modularen Sicherheitssteuerungsystems 10 mit dessen einfachen Umstrukturierungs- und Erweiterungsmöglichkeiten auszunutzen.

Die hohen Einrichtungskosten für kleinere Aufgaben bei einer herkömmlich bekannten modularen Sicherheitsschaltvorrichtung werden auf ein der Aufgabe angemessenes Maß reduziert. So kann der Anwender mit nur einem Modulsystem die Sicherheitsaufgaben seines breiten Maschinenspektrums lösen. Das Anwenderspektrum reicht von einfachen Sicherheitsfunktionen wie etwa einem Not-Aus bis hin zu komplex ineinander greifenden Sicherheitsfunktionen wie eine Zutrittsicherung mittels Laserscanner und Stillstandsüberwachung der Motoren. Dabei müssen vom Anwender keine verschiedenen Technologien eingesetzt, trainiert und gewartet werden. Dies mindert die Personalkosten, vermeidet Anwendungsfehler und reduziert die Lagerhaltung. Die Sicherheitsschaltvorrichtung 10 deckt das Anwendungsspektrum von Sicherheitsrelais bis hin zu frei programmierbaren Steuerungssystemen kostenoptimal ab.
Ein weiterer Vorteil besteht in der reduzierten Ansprechzeit des Systems. So können zeitkritische Eingangsignale direkt und zeitoptimal vom Ausgangsmodul 14 verarbeitet und den unmittelbar angeschlossenen Aktoren 18 zugeordnet werden. Die Auswertung, welche die Ausgangsmodul-Steuerung 20 ausführen muss, ist auf die Aktoren 18 zugeschnitten, somit schlanker und schneller ausführbar als allein in einer zentralen Steuerungseinheit. Die Ansprechzeit wird darüber hinaus nicht verlängert, wenn die Sicherheitsschaltvorrichtung 10 durch das Hinzufügen von zusätzlichen Modulen 12, 14 erweitert wird.

Durch eine Parallelverarbeitung bei der Auswertung wird somit die Komplexität auf die zentrale Steuerung 28 und die Ausgangsmodul-Steuerung 20 verteilt. Dabei kann auch nach dem zugrundeliegenden Sensor 16 differenziert werden: Eine Sicherheitskamera etwa benötigt sehr viel lokale Rechenleistung, die ein oder mehrere Ausgangsmodul-Steuerungen 20 und die zentrale Steuerung 28 zur Verfügung stellen, wobei gerade die zeitkritischen Operationen zumindest verstärkt in der in unmittelbarer Nähe angeordneten Ausgangsmodul-Steuerung 20 verbleibt. Andererseits gibt es "Master"-Auswertungen wie ein allgemeines Not-Aus, das der zentralen Steuerung 28 zuzuordnen ist. In dieser Weise werden die Auswertungsaufgaben vorteilhaft zur Parallelverarbeitung verteilt.

Auch wenn Merkmale der Erfindung im Zusammenhang mit einer Ausführungsform beschrieben worden sind, so umfasst die Erfindung doch auch weitere Kombinationen der beschriebenen Merkmale. Dies gilt ganz besonders für die Module, die ja gerade auf Austauschbarkeit ausgelegt sind.

## Patentansprüche

1. Modulare Sicherheitsschaltvorrichtung (10), die mindestens ein Ausgangsmodul (14) und eine mit allen Ausgangsmodulen (14) über einen Bus (22) verbundene zentrale Steuerung (28) aufweist, die ein Steuerungsmodul bildet, wobei das Ausgangsmodul (14) für den Empfang von Eingangsdaten mindestens eines Sensors (16) oder Schalters (16a) ausgebildet ist und mindestens einen Ausgang (14b) für einen Aktor (18) hat, wobei die zentrale Steuerung (28) für den Empfang zumindest eines Teils der Eingangsdaten und für deren Auswertung zur Ermittlung von Ausgabedaten an den Ausgang (14b) ausgebildet ist,
**dadurch gekennzeichnet,**
**dass** das Ausgangsmodul (14) eine eigene Ausgangsmodul-Steuerung (20) aufweist, die für die komplexe Auswertung der Eingangsdaten eines Überwachungssensors, der erfasste Objektgrößen, Objektlagen und Objektbewegungen als zeitabhängiges Signalmuster ermitteln kann, gemeinsam mit der zentralen Steuerung (28) mittels komplexer Sicherheitslogikfunktionen zur Ermittlung von Ausgabedaten an den Ausgang (14b) ausgebildet ist
und **dass** die Ausgangsmodul-Steuerung (20) ein unmittelbar wirksames Abschaltsignal an einen zugeordneten Aktor (18) abgeben kann.

2. Sicherheitsschaltvorrichtung (10) nach Anspruch 1, wobei die Ausgangsmodul-Steuerung (20) für die Auswertung konfigurierbar ist. ,

3. Sicherheitsschaltvorrichtung (10) nach Anspruch 2, wobei die Konfiguration in einer Speichereinheit des jeweiligen Ausgangsmoduls (14) oder der zentralen Steuerung (28) abgelegt ist und diese Speichereinheit insbesondere austauschbar ist.

4. Sicherheitsschaltvorrichtung (10) nach Anspruch 3, wobei die Speichereinheit über einen Transponder mit der Ausgangsmodul-Steuerung (20) oder der zentralen Steuerung (28) verbunden ist.

5. Sicherheitsschaltvorrichtung (10) nach einem der vorhergehenden Ansprüche, wobei der Sensor (16) ein Überwachungssensor, insbesondere ein Laserscanner oder eine Sicherheitskamera, eine Lichtschranke, ein Lichtgitter oder ein Laserscanner, der Schalter (16a) ein Not-Aus-Schalter oder ein Türschalter und der Aktor (18) eine Ausschalteinrichtung für eine Maschine oder eine Warneinrichtung ist und die Ausgangsmodul-Steuerung (20) für die Auswertung für einen oder mehrere dieser Sensoren (16) und/oder Aktoren (18) konfigurierbar ist.

6. Sicherheitsschaltvorrichtung (10) nach einem der vorhergehenden Ansprüche, wobei mindestens ein Eingangsmodul (12) vorgesehen ist, das Eingänge (12a) für Sensoren (16) und/oder Schalter (16a) aufweist und wobei jedes Eingangsmodul (12) mit zumindest einem der Ausgangsmodule (14) über den Bus (22) oder über konfigurierbare Verbindungen (12b-d) verbunden ist.

7. Sicherheitsschaltvorrichtung (10) nach einem der vorhergehenden Ansprüche, wobei das Ausgangsmodul (14) Eingänge für Sensoren (16) und/oder Schalter (16a) aufweist.

8. Sicherheitsschaltvorrichtung (10) nach einem der vorhergehenden Ansprüche, wobei ein Gatewaymodul (24) vorgesehen ist, über das die Eingangsmodule (12), die Ausgangsmodule (14) und/oder das Steuerungsmodul (28) mit einem externen Bus (26) verbunden werden, insbesondere einem Feldbus, wobei der externe Bus mit einer externen Steuerung (30) verbunden ist.

9. Sicherheitsschaltvorrichtung (10) nach Anspruch 8, wobei die zentrale Steuerung (28) oder die externe Steuerung (30) für einen Funktionstest der Module (12, 14) und der angeschlossenen Sensoren (16) ausgebildet ist.

10. Sicherheitsschaltvorrichtung (10) nach Anspruch 8 oder 9, wobei die externe Steuerung (30) für eine externe Ansteuerung der oder einiger Aktoren (18) ausgebildet ist, wobei die Ansteuerung nur auf den Aktor (18) wirkt, wenn die zentrale Steuerung (28) und/oder die Ausgangsmodul-Steuerung (20) eines dem Aktor (18) zugeordneten Ausgangsmoduls (14) der Ansteuerung zustimmt.

11. Sicherheitsschaltvorrichtung (10) nach einem der Ansprüche 8 bis 10, wobei ein Einschaltsignal der Ausgangsmodul-Steuerung (20) an den zugeordneten Aktor (18) erst nach einer Freigabe von der zentralen Steuerung (28) und/oder der externen Steuerung (30) wirksam werden kann.

12. Sicherheitsschaltvorrichtung (10) nach einem der vorhergehenden Ansprüche, wobei die Ausgangsmodul-Steuerung (20) für eine zu der zentralen Steuerung (28) verteilte, diversitäre und/oder redundante Auswertung ausgebildet ist.

13. Sicherheitsschaltvorrichtung (10) nach einem der vorhergehenden Ansprüche, wobei das Eingangsmodul (12), das Ausgangsmodul (14), die zentrale Steuerung und der Bus (22) insbesondere durch zweikanalige Ausführung fehlersicher ausgeführt sind.

14. Sicherheitsschaltvorrichtung (10) nach einem der vorhergehenden Ansprüche, wobei jedes Modul (12, 14, 24, 28) in einem gleichartigen Gehäuse mit jeweils einem Stecker und einer Buchse zum Ineinanderstecken angeordnet ist.

15. Sicherheitsschaltvorrichtung (10) nach einem der vorhergehenden Ansprüche, wobei die Ausgangsmodul-Steuerung (20) und/oder die zentrale Steuerung (28) über einen Drehschalter oder ein Bedienelement konfiguriert werden kann.

16. Sicherheitsschaltvorrichtung (10) nach einem der vorhergehenden Ansprüche, wobei das Ausgangsmodul (14) und/oder die zentrale Steuerung (28) einen Anschluss für ein Mobiltelefon, einen Computer oder einen PDA aufweist, mittels dessen die Ausgangsmodul-Steuerung (20) und/oder die zentrale Steuerung (28) über eine Grafikoberfläche konfiguriert werden kann.

17. Sicherheitsschaltvorrichtung (10) nach Anspruch 16, wobei der Anschluss eine feste Verbindung wie eine serielle Schnittstelle oder eine drahtlose Verbindung insbesondere über Bluetooth, wLan, GSM, UMTS oder Infrarot ist.

18. Sicherheitsschaltvorrichtung (10) nach einem der vorhergehenden Ansprüche, wobei die zentrale Steuerung (28) und/oder die Ausgangsmodul-Steuerung (22) einen Webserver aufweist.

19. Sicherheitsschaltverfahren mittels einer über einen Bus (22) untereinander verbundenen Modulreihe aus mindestens einem Ausgangsmodul (14) und einem Steuerungsmodul (28), wobei das Ausgangsmodul (14) Eingangsdaten mindestens eines Sensors (16) oder Schalters (16a) empfängt und einen Aktor (18) schaltet oder nicht schaltet, wobei zumindest ein Teil der Eingangsdaten von dem Steuerungsmodul (28) empfangen, dort ausgewertet und das Auswertungsergebnis an das Ausgangsmodul (14) zurückgegeben wird, **dadurch gekennzeichnet, dass** das Ausgangsmodul (14) eine eigene Ausgangsmodul-Steuerung (20) aufweist, welche die Eingangsdaten eines Überwachungssensors (16), der erfasste Objektgrößen, Objektlagen und Objektbewegungen als zeitabhängiges Signalmuster ermittelt, gemeinsam mit dem Steuerungsmodul (28) mittels komplexer Sicherheitslogikfunktionen auswertet, und dass die Ausgangsmodul-Steuerung (20) anhängig von der komplexen Auswertung ein unmittelbar wirksames Abschaltsignal an einen zugeordneten Aktor (18) abgibt.

20. Sicherheitsschaltverfahren nach Anspruch 19, wobei die Auswertung der Ausgangsmodul-Steuerung (20) und des Steuermoduls (28) konfiguriert wird.

21. Sicherheitsschaltverfahren nach Anspruch 19 oder 20, wobei die Auswertung per Mobiltelefon, Computer oder PDA über eine Grafikoberfläche, insbesondere drahtlos oder über einen Webserver des Ausgangsmoduls (14) und/oder des Steuerungsmoduls (28), konfiguriert wird.

## Claims

1. A modular safety switching device (10), which includes at least one output module (14) and a central control (28) which is connected to all output modules (14) via a bus (22) and, which forms a control module, wherein the output module (14) is adapted to receive incoming data from at least one sensor (16) or switch (16a) and has at least one output (14b) for an actuator (18), wherein the central control (28) is adapted to receive at least one part of the incoming data and to evaluate this for the determination of output data transferred to the output (14b), **characterized in that** the output module (14) has its own output module control (20), which is adapted for the complex evaluation of the incoming data of a monitoring sensor, the monitoring sensor being able to determine detected object sizes, object positions and object movements as a time dependent signal pattern, the output control module (20) being adapted together with the central control (28) for the determination by means of complex safety logic functions of output data transferred to the output (14b) and **in that** the output module control (20) can transmit an instantaneous switch-off signal to an associated actuator (18).

2. A safety switching device (10) in accordance with claim 1, wherein the output module control (20) is configurable for the evaluation.

3. A safety switching device (10) in accordance with claim 2, wherein the configuration is stored in a memory unit of the respective output module (14) or in the central control (28) and this memory unit is, in particular, exchangeable.

4. A safety switching device (10) in accordance with claim 3, wherein the memory unit is connected via a transponder to the output module control (20) or to the central control (28).

5. A safety switching device (10) in accordance with any one of the preceding claims, wherein the sensor (16) is a monitoring sensor, in particular, a laser scanner or a safety camera, a light barrier, a light grid or a laser scanner, the switch (16a) is an emergency switch-off switch or a door switch and the actuator (18) is a switch-off unit for a machine or a warning unit and the output module control (20) can be configured for the evaluation of one or more of these sensors (16) and/or actuators (18).

6. A safety switching device (10) in accordance with any one of the preceding claims, wherein at least one input module (12) is provided, which includes the inputs (12a) for sensors (16) and/or switches (16a) and wherein each input module (12) is connected to at least one of the output modules (14) via the bus (22) or via configurable connections (12b-d).

7. A safety switching device (10) in accordance with any one of the preceding claims, wherein the output module (14) includes inputs for sensors (16) and/or switches (16a).

8. A safety switching device (10) in accordance with any one of the preceding claims, wherein a gateway module (24) is provided, via which the input modules (12), the output modules (14) and/or the control module (28) are connected to an external bus (26), in particular a field bus, wherein the external bus is connected to an external control (30).

9. A safety switching device (10) in accordance with claim 8, wherein the central control (28) or the external control (30) is adapted for a function test of the modules (12, 14) and of the connected sensors (16).

10. A safety switching device (10) in accordance with claim 8 or 9, wherein the external control (30) is adapted for an external control of the one or of some actuators (18), wherein the control only acts on the actuator (18) when the central control (28) and/or the output module control (20) accepts the control of an output module (14) associated with an actuator (18).

11. A safety switching device (10) in accordance with any one of claims 8 to 10, wherein a switch-on signal of an output module control (20) can first act at the associated actuator (18) only when a clearance is given by the central control (28) and/or the external control (30).

12. A safety switching device (10) in accordance with any one of the preceding claims, wherein the output module control (20) is adapted for a diverse evaluation and/or a redundant evaluation distributed to the central control (28).

13. A safety switching device (10) in accordance with any one of the preceding claims, wherein the input module (12), the output module (14), the central control and the bus (22) are designed to be fail safe, in particular through a two channel construction.

14. A safety switching device (10) in accordance with any one of the preceding claims, wherein each module (12, 14, 24, 28) is arranged in a similar type housing in each case with a plug and a socket for interconnection.

15. A safety switching device (10) in accordance with any one of the preceding claims, wherein the output module control (20) and/or the central control (28) can be configured via a rotary switch or an operating element.

16. A safety switching device (10) in accordance with any one of the preceding claims, wherein the output module control (20) and/or the central control (28) include a connection for a mobile phone, a computer or a PDA, by means of which the output module control (20) and/or the central control (28) can be configured via a graphical interface.

17. A safety switching device (10) in accordance with claim 16, wherein the connection is a permanent connection such as a serial interface or is a wireless connection in particular via Bluetooth, wLAN, GSM, UMTS or infrared.

18. A modular safety switching device (10) in accordance with any one of the preceding claims, wherein the central control (28) and/or the output module control (22) has a web server.

19. A safety switching process by means of a module series consisting of at least one output module (14) and a control module (28) interconnected by a bus (22), wherein the output module (14) receives incoming data of at least one sensor (16) or switch (16a) and, a actuator (18) switches or does not switch, wherein at least a part of the incoming data is received by the control module (28) is evaluated there and the evaluation result is given back to the output module (14), **characterized in that** the output module (14) has its own output module control (20) which together with a control module (28) evaluates the incoming data of a monitoring sensor by means of complex secure logic functions, with the monitoring sensor being able to determine detected object sizes, object positions and object movements as a time dependent signal pattern and that in dependence of the complex evaluation the output module control (20) can transmit an instantaneous switch-off signal to an associated actuator (18).

20. A safety switching process in accordance with claim 19, wherein the evaluation of the output module control (20) and the control module (28) is configured.

21. A safety switching process in accordance with claim 19 or 20, wherein the evaluation is configured by mobile phone, computer or PDA via a graphical interface, in particular in wireless manner or via a web server of the output module (14) and/or the control module (28).

## Revendications

1. Dispositif modulaire de commutation de sécurité (10), qui présente au moins un module de sortie (14) et une commande (28) centrale reliée par un bus (22) à tous les modules de sortie (14), laquelle commande forme un module de commande, le module de sortie (14) étant conçu pour la réception de données d'entrée d'au moins un capteur (16) ou d'un commutateur (16a) et ayant au moins une sortie (14b) pour un actionneur (18), la commande (28) centrale étant conçue pour la réception d'au moins une partie des données d'entrée et pour leur analyse pour la détermination de données de sortie sur la sortie (14b),
**caractérisé en ce que**
le module de sortie (14) présente une commande de module de sortie (20) propre qui est conçue pour l'analyse complexe des données d'entrée d'un capteur de contrôle, lequel peut déterminer des grandeurs d'objet, des positions d'objet et des déplacements d'objet enregistrés sous forme de modèle de signal dépendant du temps, conjointement avec la commande (28) centrale au moyen de fonctions de logique de sécurité complexes pour déterminer des données de sortie sur la sortie (14b)
et **en ce que** la commande du module de sortie (20) peut délivrer un signal de déconnexion directement efficace à un actionneur (18) attribué.

2. Dispositif de commutation de sécurité (10) selon la revendication 1, la commande du module de sortie (20) pouvant être configurée pour l'analyse.

3. Dispositif de commutation de sécurité (10) selon la revendication 2, la configuration étant déposée dans une unité de stockage du module de sortie (14) concerné ou de la commande (28) centrale et cette unité de stockage pouvant être en particulier remplacée.

4. Dispositif de commutation de sécurité (10) selon la revendication 3, l'unité de stockage étant reliée par un transpondeur à la commande du module de sortie (20) ou à la commande (28) centrale.

5. Dispositif de commutation de sécurité (10) selon l'une quelconque des revendications précédentes, le capteur (16) étant un capteur de contrôle, en particulier un scanner laser ou une caméra de sécurité, une barrière lumineuse, une grille lumineuse ou un scanner laser, le commutateur (16a) étant un commutateur d'arrêt d'urgence ou un commutateur de porte et l'actionneur (18) un dispositif de déconnexion pour une machine ou un dispositif d'alarme et la commande du module de sortie (20) pouvant être configurée pour l'analyse d'un ou plusieurs de ces capteurs (16) et/ou actionneurs (18).

6. Dispositif de commutation de sécurité (10) selon l'une quelconque des revendications précédentes, au moins un module d'entrée (12) étant prévu, lequel présente des entrées (12a) pour des capteurs (16) et/ou des commutateurs (16a) et chaque module d'entrée (12) étant relié à au moins l'un des modules de sortie (14) par le bus (22) ou par des liaisons (12b-d) configurables.

7. Dispositif de commutation de sécurité (10) selon l'une quelconque des revendications précédentes, le module de sortie (14) présentant des entrées pour des capteurs (16) et/ou des commutateurs (16a).

8. Dispositif de commutation de sécurité (10) selon l'une quelconque des revendications précédentes, un module de passerelle (24) étant prévu, par lequel les modules d'entrée (12), les modules de sortie (14) et/ou le module de commande (28) sont reliés à un bus (28) externe, en particulier un bus de champ, le bus externe étant relié à une commande (30) externe.

9. Dispositif de commutation de sécurité (10) selon la revendication 8, la commande (28) centrale ou la commande (30) externe étant conçue pour un test de fonctionnement des modules (12, 14) et des capteurs (16) raccordés.

10. Dispositif de commutation de sécurité (10) selon la revendication 8 ou 9, la commande externe (30) étant conçue pour une activation externe des ou de quelques actionneurs (18), l'activation n'agissant que sur l'actionneur (18) lorsque la commande (28) centrale et/ou la commande de module de sortie (20) d'un module de sortie (14) attribué à l'actionneur (18) approuve l'activation.

11. Dispositif de commutation de sécurité (10) selon l'une quelconque des revendications 8 à 10, un signal d'enclenchement de la commande de module de sortie (20) envoyé à l'actionneur (18) attribué ne pouvant devenir efficace qu'après une validation par la commande centrale (28) et /ou par la commande (30) externe.

12. Dispositif de commutation de sécurité (10) selon l'une quelconque des revendications précédentes, la commande du module de sortie (20) étant conçue pour une analyse répartie par rapport à la commande (28) centrale, différenciée et/ou redondante.

13. Dispositif de commutation de sécurité (10) selon l'une quelconque des revendications précédentes, le module d'entrée (12), le module de sortie (14), la commande centrale et le bus (22) étant réalisés de façon protégée contre les erreurs en particulier par une réalisation à deux canaux.

14. Dispositif de commutation de sécurité (10) selon l'une quelconque des revendications précédentes, chaque module (12, 14, 24, 28) étant disposé dans un boîtier similaire comprenant à chaque fois une fiche mâle et une fiche femelle pour l'emboîtement.

15. Dispositif de commutation de sécurité (10) selon l'une quelconque des revendications précédentes, la commande de module de sortie (20) et/ou la commande (28) centrale pouvant être configurées au moyen d'un commutateur rotatif ou d'un élément de commande.

16. Dispositif de commutation de sécurité (10) selon l'une quelconque des revendications précédentes, le module de sortie (14) et/ou la commande (28) centrale présentant un branchement pour un téléphone mobile, un ordinateur ou un PDA (assistant numérique personnel), au moyen duquel la commande du module de sortie (20) et/ou la commande (28) centrale peut être configurée par l'intermédiaire d'une surface graphique.

17. Dispositif de commutation de sécurité (10) selon la revendication 16, le branchement étant une liaison fixe comme une interface série ou une liaison sans fil, en particulier par Bluetooth, wLan, GSM, UMTS ou infrarouge.

18. Dispositif de commutation de sécurité (10) selon l'une quelconque des revendications précédentes, la commande (28) centrale et/ou la commande du module de sortie (22) présentant un serveur web.

19. Procédé de commutation de sécurité au moyen d'une série de modules reliés entre eux par un bus (22) et comprenant au moins un module de sortie (14) et un module de commande (28), le module de sortie (14) recevant des données d'entrée d'au moins un capteur (16) ou d'un commutateur (16a) et commutant ou ne commutant pas un actionneur (18), au moins une partie des données d'entrée étant reçue du module de commande (28), analysée ici et le résultat de l'analyse étant retourné au module de sortie (14), **caractérisé en ce que** le module de sortie (14) présente une commande de module de sortie (20) propre, qui analyse les données d'entrée d'un capteur de contrôle (16), lequel détermine des grandeurs d'objet, positions d'objet et déplacements d'objet enregistrés sous forme de modèle de signal dépendant du temps, conjointement avec le module de commande (28) au moyen de fonctions de logique de sécurité complexes, et **en ce que** la commande du module de sortie (20) envoie en fonction de l'analyse complexe un signal de déconnexion directement efficace à un actionneur (18) attribué.

20. Procédé de commutation de sécurité selon la revendication 19, l'analyse de la commande de module de sortie (20) et du module de commande (28) étant configurée.

21. Procédé de commutation de sécurité selon la revendication 19 ou 20, l'analyse étant configurée par téléphone mobile, ordinateur ou PDA au moyen d'une surface graphique, en particulier sans fil et au moyen d'un serveur web du module de sortie (14) et/ou du module de commande (28).
